## Europäisches Patentamt
## European Patent Office
## Office européen des brevets

(19)

(11) Publication number: **0 028 876**
**B1**

(12) **EUROPEAN PATENT SPECIFICATION**

(45) Date of publication of patent specification: **16.02.83**

(51) Int. Cl.³: **B 62 D 55/20,**
**B 62 D 55/14, F 16 J 15/52**

(21) Application number: **80303281.2**

(22) Date of filing: **18.09.80**

(54) **Shear seal assembly.**

(30) Priority: **05.11.79 PCT/US79/00943**

(43) Date of publication of application:
**20.05.81 Bulletin 81/20**

(45) Publication of the grant of the patent:
**16.02.83 Bulletin 83/7**

(84) Designated Contracting States:
**FR GB IT**

(56) References cited:
**FR - A - 2 412 014**
**US - A - 2 868 562**
**US - A - 2 911 840**
**US - A - 3 094 335**
**US - A - 3 218 107**
**US - A - 3 620 578**
**US - A - 3 680 924**
**US - A - 3 759 586**

(73) Proprietor: **CATERPILLAR TRACTOR CO.**
**100 Northeast Adams Street**
**Peoria Illinois 61629 (US)**

(72) Inventor: **Langewisch, Stewart A.**
**Route 1 Box 435**
**Blue Grass Iowa 52726 (US)**

(74) Representative: **Jackson, Peter Arthur et al,**
**GILL JENNINGS & EVERY 53 to 64, Chancery Lane**
**London WC2A 1HN (GB)**

Courier Press, Leamington Spa, England

## Shear seal assembly

This invention relates generally to shear seals between two members having limited relative motion therebetween.

The use of shear seals to seal between members having a limited degree of motion relative to one another is well known in the art. For example, in earthmoving equipment applications wherein vehicles normally operate in environments which contain a considerable amount of abrasive contaminants, shear seals are employed to retain lubricants and prevent the ingress of contaminants into articulated joints. Joints of this nature which are subject to abrasive contaminants and therefore require sealing typically include the pivot connections between the links in track chains, lift arm connections, track roller frame pivot joints and the like.

Examples of seals which may be used in these applications are disclosed in U.S. Patent Specification No. 3,218,107 and in U.S. Patent Specification No. 3,680,924. No. 3,218,107 discloses a shear seal having an inner sleeve pressed onto a track pin and an outer sleeve pressed into a link. No. 3,680,924 discloses a shear seal for a track pin of an endless track having an inner metal ring of the seal pressed or cemented into one link and an outer metal ring pressed into an adjacent link. In both disclosures, the inner and outer sleeves or metal rings are joined by an annular elastomeric ring positioned therebetween. In addition, the relative tolerances between the rings or sleeves and their mating surfaces must be closely controlled.

A particular problem is encountered in the assembly of shear seals into the mechanism to be sealed. Normally, a shear seal is installed with one of the inner or outer sleeves in a press fit relationship with one of the members to be sealed. As the members are assembled, the other of the inner or outer sleeves is installed in a press fit relationship with the second member to be sealed, for example, into a bore or onto a shaft. The assembly force tends to distort or deflect the seal, which, if uncontrolled, will damage the elastomeric material and/or damage the bond between the elastomeric material and the inner and/or outer sleeves of the shear seal.

In accordance with the present invention, a seal assembly for sealing between inner and outer members having limited relative motion therebetween, the seal assembly including an inner sleeve which is fitted closely around the inner member, an outer sleeve which is fitted closely within a counterbore in the outer member, and an annular elastomeric member connected between the sleeves, is characterised by an axially facing thrust surface at an inner end of the counterbore, and thrust means which abuts the thrust surface and extends radially overlapping the adjacent ends of the sleeves; whereby, upon assembly with the thrust means and sub-assembly of sleeves and elastomeric member fitted with the counterbore, the thrust means restricts axial movement of the inner sleeve relatively to the outer sleeve upon fitting of the inner member through the inner sleeve in a direction relative to the inner sleeve opposite to that in which the thrust surface faces.

The improved construction is effective in sealing the inner and outer members and permits limited relative motion, particularly rotation, therebetween. Connecting the inner and outer sleeves to the movable members, preferably by press fitting, may eliminate any relative motion between the seal sleeves and the respective members to which they are fitted, and, therefore, eliminates groove wearing and resultant leakage. The thrust means permits installation of the seal without tearing the elastomeric member or otherwise damaging the seal assembly, particularly when there is perhaps a bearing between the inner and outer members which prevents the thrust surface itself extending sufficiently far radially inwards to abut the inner sleeve during assembly.

The elastomeric member may also be protected during disassembly if the assembly includes second thrust means located in the counterbore relatively to the outer member by a snap ring and extending radially overlapping the ends of the sleeves remote from the thrust surface to restrict axial movement of the sleeves relatively to one another when the inner and outer members are disassembled.

Further protection for the elastomeric member may be provided by means for restricting the ingress of contaminants through the outer end of the counterbore into contact with the elastomeric member. These restricting means may be provided by the second thrust means, such as an annular ring, together with the snap ring. Alternatively a separate restricting means may be used, such as an L-sectioned annular plug having a radially extending flange. The plug may be press-fitted into the outer member.

Two examples of seal assemblies constructed in accordance with the invention are illustrated in the accompanying drawings, in which:—

Figure 1 is a side elevation of a track-laying tractor incorporating one of the seal assemblies;

Figure 2 is an enlarged section taken on the line II—II in Figure 1;

Figure 3 is a further enlarged partial axial section of the seal assembly of Figure 2; and,

Figure 4 is a section similar to Figure 3, but showing a modified construction of seal assembly.

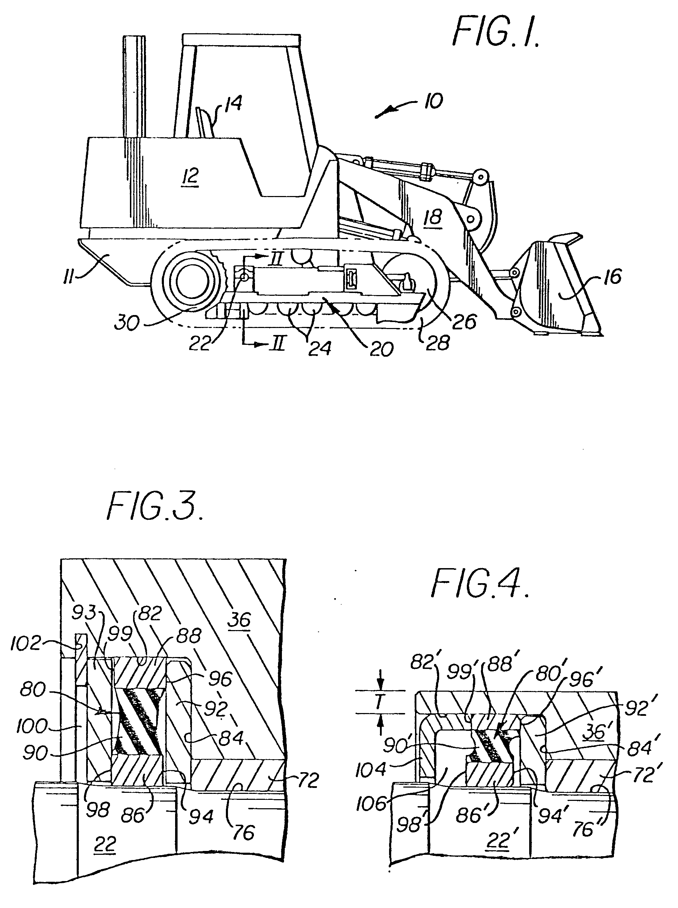

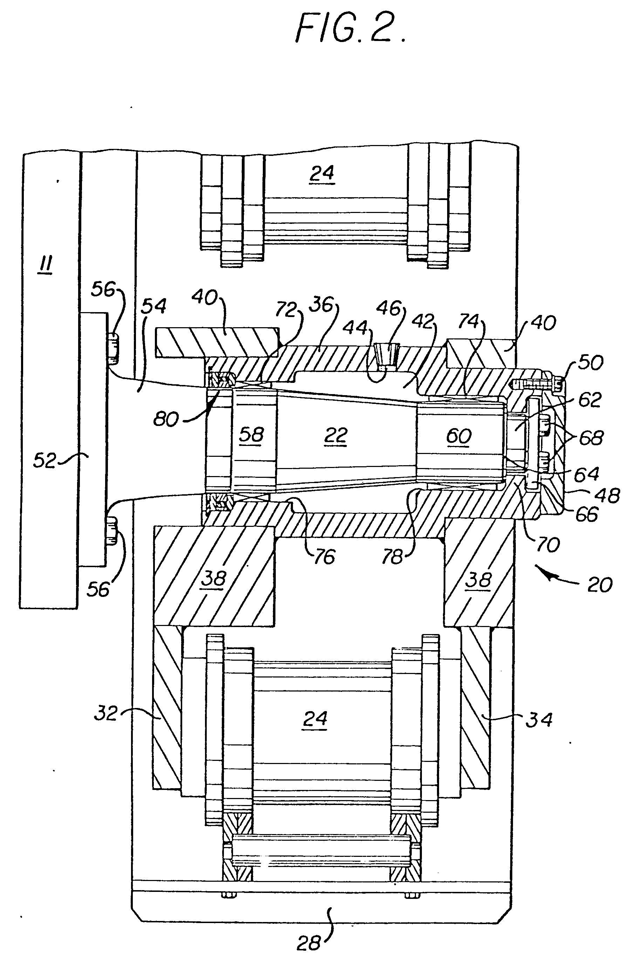

An earthmoving vehicle or track-type tractor 10 is illustrated in Figure 1 and includes a main frame 11, an engine compartment 12, an operator's station 14, a bucket 16 secured to the tractor by a pair of lift arms 18, and a track roller frame 20 mounted on a pivot bar or shaft 22 which is secured to the vehicle. The track roller frame supports a plurality of track rollers 24, a front idler 26, and a track 28 encircling a final drive sprocket 30, the rollers, and the idler.

As shown in Figure 2, the track roller frame 20 has an inner rail 32 and an outer rail 34 with a tubular housing or sleeve 36 secured therebetween by pairs of spaced pillow blocks 38 and caps 40. The sleeve includes a lubricant receiving cavity 42, an orifice or port 44 for adding lubricant to the cavity, and a plug or stopper 46 to prevent leakage of lubricant through the port. An end cap or cover plate 48 is bolted at 50 to an open end of the sleeve to prevent leakage of lubricant therefrom. Additional sealant, for example liquid gasket material, may be applied to the cap to ensure positive sealing at the cap/sleeve interface.

The pivot shaft 22 includes a flange 52 extending radially outwardly from a first end 54 and bolted at 56 to the main frame 11. The shaft extends axially outwardly from the frame into the sleeve 36 and further includes first and second bearing surfaces 58 and 60 and a second end 62 of a diameter smaller than the adjacent portion of the shaft and separated therefrom by a face 64. A retaining plate 66 is bolted at 68 to the second end portion overlapping a circumferential flange 70 extending inwardly from the sleeve intermediate the face and the retaining plate. First and second bearing sleeves 72 and 74 are connected to the tubular housing, for example in a press fit relationship in bearing receiving bores 76 and 78, and are so arranged as to be in bearing engagement with the bearing surfaces 58 and 60 respectively.

As shown in Figure 2 and as illustrated in greater detail in Figure 3, a shear seal assembly 80 is disposed in a counterbore 82 formed in one end of the sleeve 36 adjacent the bore 76 and separated therefrom by a thrust surface or face 84. In the embodiment shown, the shear seal assembly includes an inner sleeve 86 of cylindrical shape press fitted onto the shaft 22 and an outer sleeve 88 also of cylindrical shape press fitted into the counterbore. The sleeves are joined by an annular ring or disc 90 having elastomeric properties which permit limited relative motion between the sleeves in response to corresponding motion between the shaft and the tubular housing and allow the ring to return to its original, unstressed shape when an applied load is removed.

A thrust member, for example an annular washer 92, is positioned on the shaft 22 and extends radially outwardly therefrom intermediate the thrust surface 84 and along a first end 94, 96 of the inner and outer sleeves 86, 88 respectively for pressing the seal assembly onto the shaft. Similarly, to remove the seal assembly from the shaft, a second thrust member or annular washer 93 extends radially outwardly from the shaft adjacent to a second end 98, 99 of the respective inner and outer sleeves. A snap ring 100 inserted in a groove 102 extending circumferentially around the counterbore 82 retains the thrust washer in position adjacent the seal assembly and cooperates with the washer in preventing damage to the shear seal during disassembly and in protecting the elastomeric ring 90 of the shear seal from abrasives.

Referring now to Figure 4, an alternative embodiment of the shear seal assembly 80' comprises an inner and an outer sleeve 86', 88' connected by an elastomeric ring 90' and in press fit relationship with respective first and second members to be sealed 22', 36'. By way of illustration, the inner sleeve is press fit onto a shaft 22', and the outer sleeve is press fit into a counterbore 82' formed in an end of a tubular housing or sleeve 36'. As hereinbefore described, a thrust member or washer 92' is disposed adjacent and intermediate respective first ends 94', 96' of the inner and the outer sleeves and a thrust face 84' separating the counterbore from a bore 76' having a bearing sleeve 72' inserted therein.

As can be seen in the drawing, the material thickness T of the portion of the sleeve surrounding the counterbore is relatively thin and therefore of insufficient strength to accommodate the stresses which, during operation of the assembly, would be imposed thereon by a second thrust member and a snap ring. However, it is still desirous to protect the elastomeric ring of the shear seal from abrasives. To this end, an end cap or plug 104 is pressed into the counterbore forming a protective labyrinth 106 adjacent the seal assembly.

INDUSTRIAL APPLICABILITY

With the parts assembled as set forth above, the shear seal assembly 80 has application wherever two members are relatively rotatable to a limited degree and sealing is required therebetween. One such application is between a track roller frame 20 and a pivot shaft 22 for mounting the frame to a vehicle 10.

An outer sleeve 88 of the seal assembly 10 is pressed into a tubular housing or sleeve 36 and the inner sleeve 86 of the seal is pressed onto the pivot shaft 22. The press fit relationship between the inner and outer sleeves and the sealed members provides positive sealing at the mating surfaces, and the elastomeric member 90 interconnecting the inner and outer sleeves permits limited relative motion therebetween. A sealant, for example, a thread or other sealant, may also be applied to both press fits to seal any small surface irregularities.

A pair of thrust washers 92 and 93 positioned on the shaft 22 and extending radially outwardly therefrom adjacent the sides 94, 98, 96, 99 of the inner and outer sleeves 86, 88 respectively uniformly distribute the pressing forces required to assemble and disassemble the sleeve 36 and the shaft. Deflection of the seal assembly 80 is thus controlled and damage thereto is prevented. The outermost thrust member 93 further cooperates with a retainer or snap ring 100 in preventing ingress of contaminants and abrasives into the sealed area and resultant damage thereto.

In certain applications, for example, in sealing between relatively small shafts and sleeves of thin wall construction, the material strength required to retain a thrust member with a snap ring is often lacking. However, the seal assembly 80' may still be protected from external contamination by pressing an L-shaped, labyrinth forming plug 104 into the counterbore 82' to prevent ingress of abrasives therein.

The shear seal assembly 80 has further application for sealing between members having small radial displacements resulting, for example, from bearing wear and assembly tolerances. It may also be used in areas having small axial displacements due to assembly tolerances and wear, such as at the face 64 of Fig. 2 and at both faces of the circumferential flange 70 also shown in Fig. 2.

## Claims

1. A seal assembly (80/80') for sealing between inner and outer members (22, 36/22', 36') having limited relative motion therebetween, the seal assembly (80/80') including an inner sleeve (86/86') which is fitted closely around the inner member, an outer sleeve (88/88') which is fitted closely within a counterbore (82/82') in the outer member, and an annular elastomeric member (90/90') connected between the sleeves (86, 88/86' 88'), characterised by an axially facing thrust surface (84/84') at an inner end of the counterbore, and thrust means (92/92') which abuts the thrust surface and extends radially overlapping the adjacent ends (94, 96/94', 96') of the sleeves; whereby, upon assembly with the thrust means and sub-assembly of sleeves and elastomeric member fitted with the counterbore, the thrust means restricts axial movement of the inner sleeve relatively to the outer sleeve upon fitting of the inner member through the inner sleeve in a direction relative to the inner sleeve opposite to that in which the thrust surface faces.

2. A seal assembly according to claim 1, wherein the outer sleeve (88/88') is press fitted into the second counterbore (82/82').

3. A seal assembly according to claim 1 or claim 2, wherein the inner sleeve (86/86') is press fitted onto the first member (22/22').

4. A seal assembly according to any one of the preceding claims, wherein the thrust means (92/92') comprises an annular ring.

5. A seal assembly according to any one of the preceding claims, including means (93, 100/104) for restricting the ingress of contaminants through the outer end of the counterbore into contact with the elastomeric member (90/90').

6. A seal assembly according to claim 5, wherein the restricting means is an L-sectioned annular plug (104) having a radially extending flange.

7. A seal assembly according to claim 6, wherein the plug (104) is press fitted into the outer member (36').

8. A seal assembly according to any one of claims 1 to 5, including second thrust means (93) located in the counterbore relatively to the outer member (36) by a snap ring (100) and extending radially overlapping the ends (98,99) of the sleeves remote from the thrust surface (84) to restrict axial movement of the sleeves relatively to one another when the inner and outer members are disassembled.

9. A seal assembly according to claim 8, wherein the second thrust means is an annular ring (93).

10. A seal assembly according to claim 9, when dependant on claim 5, wherein the annular ring (93) and snap ring (100) also provide the means restricting the ingress of contaminants into contact with the elastomeric member (90).

## Patentansprüche

1. Dichtungsanordnung (80/80') zur Abdichtung zwischen inneren und äußeren Gliedern (22, 36/22', 36') mit einer begrenzten Relativbewegung dazwischen, wobei die Abdichtanordnung (80/80') eine Innenhülse (86/86') aufweist, die dicht um das innere Glied herum angepaßt ist, und wobei eine äußere Hülse (88/88') dicht in eine Gegenbohrung (82/82') im Außenglied eingepaßt ist, und mit einem ringförmigen Elastomerglied (90/90'), verbunden zwischen den Hülsen (86, 88/86', 88'), gekennzeichnet durch eine in Axialrichtung weisende Schuboberfläche (84/84') am inneren Ende der Gegenbohrung, und Schubmittel (92/92'), die an der Schuboberfläche anstoßen, und sich die benachbarten Enden (94, 96/94', 96') der Hülsen radial überlappend erstrecken, wodurch beim Zusammenbau mit den Schubmitteln und der Unteranordnung der Hülsen und des mit der Gegenbohrung ausgestatteten Elastomerglieds, die Schubmittel die Axialbewegung der inneren Hülse bezüglich der äußeren Hülse einschränken, und zwar beim Durchführen des inneren Glieds durch die innere Hülse in eine Richtung bezüglich der Innenhülse entgegengesetzt zu der, in welche die Schuboberfläche weist.

2. Dichtungsanordnung nach Anspruch 1, wobei die Außenhülse (88/88') durch Preßpassung in der zweiten Gegenbohrung (82/82') angeordnet ist.

3. Dichtungsanordnung nach Anspruch 1 oder 2, wobei die Innenhülse (86/86') durch Preßpassung auf dem ersten Glied (22/22') angeordnet ist.

4. Dichtungsanordnung nach einem der vorhergehenden Ansprüche, wobei die Schubmittel (92/92') einen ringförmigen Ring aufweisen.

5. Dichtungsanordnung nach einem der vorhergehenden Ansprüche, mit Mitteln (93, 100/104) zum Einschränken des Eintritts von Verunreinigungen durch das äußere Ende der Gegenbohrung in Berührung mit dem Elastomerglied (90/90').

6. Dichtungsanordnung nach Anspruch 5, wobei die Einschränkmittel ein im Querschnitt L-förmiger Ringstopfen (104) mit einem sich radial erstreckenden Flansch sind.

7. Dichtungsanordnung nach Anspruch 6, wobei der Stopfen (104) in das Außenglied (36') durch Preßpassung eingefügt ist.

8. Dichtungsanordnung nach irgendeinem der Ansprüche 1 bis 5, mit zweiten Schubmitteln (93), angeordnet in der Gegenbohrung bezüglich des Außenglieds (36) durch einen Schnappring (100) und sich radial die Enden (98,99) der Hülsen überlappend erstrecken, und zwar entfernt von der Schuboberfläche (84), um die Axialbewegung der Hülsen bezüglich einander dann einzuschränken, wenn die Innen- und Außenglieder auseinandergebaut sind.

9. Dichtungsanordnung nach Anspruch 8, wobei die zweiten Schubmittel ein ringförmiger Ring (93) sind.

10. Dichtungsanordnung nach Anspruch 9 bei Abhängigkeit von Anspruch 10, wobei der ringförmige Ring (93) und der Schnappring (100) auch die Mittel zur Einschränkung des Eintritts von Verunreinigungen in Berührung mit dem Elastomerglied (90) vorsehen.

## Revendications

1. Ensemble d'étanchéité (80/80') pour réaliser une étanchéité entre des organes intérieur et extérieur (22, 36/22') ayant un mouvement relatif limité entre eux, ensemble d'étanchéité comprenant un manchon intérieur (86/86') qui est ajusté étroitement autour de l'organe intérieur, un manchon extérieur (88/88') qui est ajusté étroitement dans un contre-perçage (82/82') dans l'organe extérieur, et un élément élastomérique annulaire (90/90') relié entre les manchons (86, 88/86', 88'), caractérisé par une surface de butée orientée axialement (84/84') à une extrémité intérieure du contre-perçage et par un moyen de poussée (92/92') qui bute contre la surface de butée et s'étend radialement en recouvrant les extrémités adjacentes (94, 96/94', 96) des manchons ce qui fait que lors de l'assemblage avec le moyen de poussée et le sous-e'nsemble des manchons et de l'élément élastomérique ajusté dans le contre-perçage, le moyen de poussée restreint le mouvement axial du manchon intérieur par rapport au manchon extérieur lors du montage de l'organe intérieur dans le manchon intérieur dans une direction par rapport au manchon intérieur qui est opposée à celle dans laquelle est orientée la surface de butée.

2. Ensemble d'étanchéité selon la revendication 1, dans lequel le manchon extérieur (88/88') est emmanché à force dans le second contre-perçage (82/82').

3. Ensemble d'étanchéité selon la revendication 1 ou la revendication 2, dans lequel lequel le manchon intérieur (86, 86') est emmanché à force sur le premier organe (22/22').

4. Ensemble d'étanchéité selon l'une quelconque des revendications précédentes dans laquel le moyen de poussée (92/92') comprend une bague annulaire.

5. Ensemble d'étanchéité selon l'une quelconque des revendications précédentes comprenant un moyen (93, 100/104) pour restreindre l'entrée d'agents de contamination par l'extrémité extérieure du contre-perçage pour venir en contact avec l'organe élastomérique (90/90').

6. Ensemble d'étanchéité selon la revendication 5, dans lequel le moyen de restriction est un tampon annulaire à section en L(104) ayant une bordure s'étendant radialement.

7. Ensemble d'étanchéité selon la revendication 6, dans lequel le tampon (104) est emmanché à force dans l'organe extérieur (36').

8. Ensemble d'étanchéité selon l'une quelconque des revendications 1 à 5 comprenant un second moyen de poussée positionné dans le contre-perçage par rapport à l'organe extérieur (36) par une bague à ressort (100) et s'étendant radialement en recouvrant les extrémités (98, 99) des manchons qui sont éloignés de la surface de butée (84) afin de restreindre le mouvement axial des manchons l'un par rapport à l'autre quand les organes intérieur et extérieur sont désassemblés.

9. Ensemble d'étanchéité selon la revendication 8, dans lequel le second moyen de butée est une bague annulaire (93).

10. Ensemble d'étanchéité selon la revendication 9, quand elle dépend de la revendication 5, dans lequel la bague annulaire (93) et la bague à ressort (100) constituent également le moyen restreignant l'entrée d'agents de contamination de façon à les empêcher de venir en contact avec l'organe élastomérique (90).

# FIG.I.

# FIG.3.

# FIG.4.

0 028 876

# FIG.2.